# EUROPEAN PATENT APPLICATION

(11) **EP 3 406 955 A1**
(43) Date of publication of application: **28.11.2018**
(21) Application number: 17290069.8
(22) Date of filing: 23.05.2017
(51) Int. Cl.: F16L 23/036, F16L 25/01, H02G 5/00, H02G 5/06, F16L 25/12

(54) **A PIPE CONNECTION**

(71) Applicant: General Electric Technology GmbH, 5400 Baden (CH)
(72) Inventor: De-Brito, Luis, 74350 Cercier (FR); Barbe, Tommie, 73100 Aix les Bains (FR); Serain, Mathias, 73190 St Baldoph (FR)
(74) Representative: Fischer, Michael Maria

(57) **Abstract**

The invention relates to a pipe connection (100) in a gas-insulated electric line where there is ready access for fasteners (40) enabling them to be easily attached or removed, and which can accommodate misalignment between the pipes (10, 20) to be attached.

## Description

### TECHNICAL FIELD

The invention relates to the field of gas-insulated switchgears (GIS). More particularly, the invention relates to the connections between the pipes of the gas-insulated electric line within which the high-voltage electrical conductors extend and insulating gas is pressurised. Yet more particularly, the invention relates to a pipe connection where there is ready access for fasteners enabling them to be easily attached or removed, and which can accommodate misalignment between the pipes to be attached.

### PRIOR ART

Switchgears are provided in high-voltage electrical power systems to enable downstream equipment to be de-energised and isolated so as to permit, for example, repair, maintenance, or installation of a new component. Gas-insulated switchgears (GIS) are generally preferred to other types of switchgears as they are capable of safely handling large currents and power levels while occupying a substantially smaller volume. Electrical conductors in the GIS are fitted inside tubular compartments, or pipes, filled with insulating gas, typically SF6 gas.

The pipes are connected to each other end to end with the conductors extending therein so as to form a gas-insulated electric line. The pipes are typically elongate and cylindrical and comprise a radial flange at each end with holes for receiving fasteners. Due to their length, size and weight of the pipes, and in part to the order of assembly, e.g. when the pipes are installed from opposite ends, it is not always easy to have them meet precisely at a predetermined position. As such, the pipes are arranged to come within proximity of one another, and a sleeve slidably mounted within one of the pipes moved to bridge the distance between two pipe ends and secured with fasteners to the other pipe to thereby complete the connection. The sleeve is also sealingly provided so as to maintain the gas-tight connection between the pipes. Such pipe connections are known.

Apart from bridging the distance between two pipes and ensuring gas-tightness, the sleeve also serves as an access point to the inside of the pipe connection. By removing the fasteners, the sleeve can be slid back completely into the pipe within which it is mounted to provide access to the interior, e.g. for maintenance, testing, etc.

In order to ensure electrical continuity between the two pipes, shunts are provided between the flange of the sleeve and the flange of the pipe within which it is mounted. These shunts ensure that a path remains for current between the sleeve and the pipe which despite being made of metal may not provide reliable electrical continuity due to their sliding and sealing connection. They provide a dedicated path for the conduction of permanent current (or induced current) which may flow through the pipes in single phase arrangements, or accidental current which can occur in single or three phase arrangements such as when arching current is earthed. Although some current flows through the fasteners, which are made of metal, the contact between the fasteners and the pipes is not entirely reliable and thus the use of shunts is preferred.

So as to better withstand the 'base effect', which is the force due to pressure acting on the connection spreading the pipes, seals and fasteners and pulling them apart, the pipe connection is secured against movement. Whereas expansion-joint pipe connections have the sleeve remaining movable and are therefore more prone to the base effect, this pipe connection including the sleeve is secured against movement by the fasteners with the aim of withstanding the base effect.

However, the fasteners securing the pipes and sleeve together are each composed of numerous parts (nuts and bolts) and are rather complicated to remove. Furthermore, fastener components between the back faces of the flanges of the first and second pipes are difficult to access, particularly when located at the underside of the shunts. These fasteners also require manipulation by both hands in order to be removed. Similar issues are encountered when attaching the fasteners. Moreover, so as to facilitate reconnection, the nut and bolts are not always completely removed from the pipe connection, which in turn prevents the sleeve from being slid back completely thereby restricting the access to the inside of the pipe connection.

Additionally, misalignment between the pipes to be connected can also be present and their flanges may not match up precisely. When pipes are to be reconnected after disconnection, they may not realign at exactly the same position and orientation to before they were disconnected. For example, the misalignment may be due to the central axes of the pipes (and sleeve if appropriate) no longer being coaxial which results in the flanges not being exactly face to face but having a slight radial offset. As another example, the misalignment may be due to one of the pipes developing a slight twist along its axis, resulting in an angular offset between the flanges. These misalignments results in the holes on the flanges having a radial or angular offset and their central axes not lining up exactly. Similar issues may exist when connecting pipes during installation of the GIS.

Despite the offset being only a few millimetres, the pipes nevertheless need to be forced into place so that the holes in the respective flanges are precisely aligned so that the bolts can be inserted and the pipe connection made. All in all, the connecting and disconnecting the pipes is a complicated and time consuming affair for reasons mentioned above.

As such, there is clearly a need for a quicker and easier way of connecting and disconnecting the pipes of the GIS. There is equally a need for a pipe connection which can accommodate the effects of misalignment when they have to be connected.

### BRIEF DESCRIPTION OF THE INVENTION

The present invention provides a pipe connection in a gas-insulated electric line comprising a first pipe, a second pipe, a sleeve, and a plurality of fasteners, the first pipe, second pipe and the sleeve each comprising a tubular section extending axially and a flange extending radially therefrom with holes for fasteners, the first pipe and second pipe provided in a spaced apart and opposing orientation, and the tubular section of the sleeve provided within the tubular section of the first pipe and with the flange of the sleeve in contact with the flange of the second pipe, at least one of the fasteners comprising a bolt and a securing member, the bolt extending through a respective hole in the flanges of the first pipe, the sleeve and the second pipe, the bolt having a larger diameter section, a smaller diameter section, and an intermediate section with a change of diameter, the larger diameter section engaging the flange of the first pipe, the intermediate section engaging the flange of the sleeve, and the smaller diameter section being of smaller diameter than the hole in the flange of the second pipe and extending through it, and the securing member being attached to the bolt at the smaller diameter section and engaging the flange of the second pipe.

Preferable features of the invention are detailed in the appendant claims.

### BRIEF DESCRIPTION OF THE FIGURES

The invention will be better understood when reading the following detailed description and non-limiting examples, as well as studying the figures, wherein:

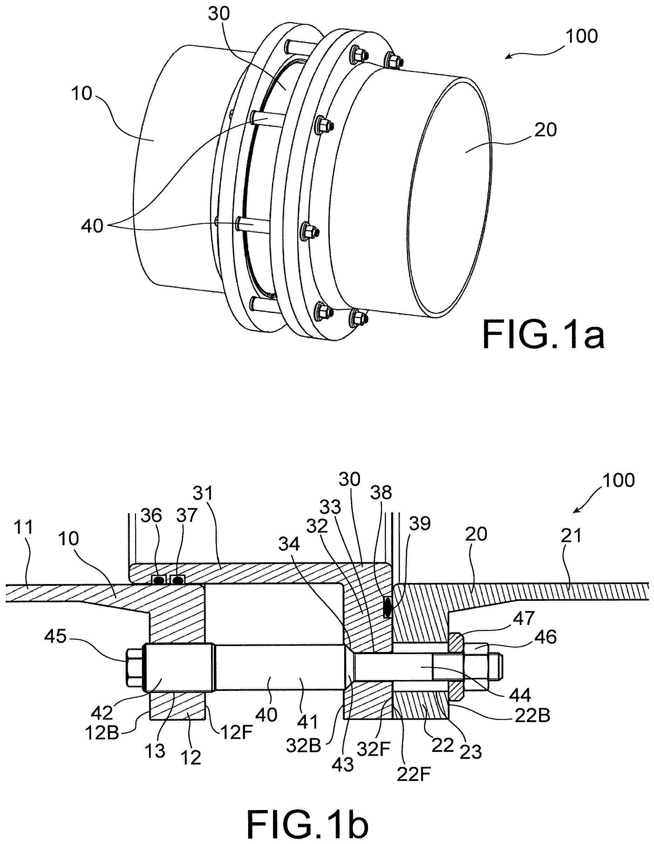

Figures 1a and 1b respectively show a perspective view and a cross-section view of a GIS pipe connection according to a preferred embodiment of the present invention.

In all of these figures, identical references can designate identical or similar elements. In addition, the various portions shown in the figures are not necessarily shown according to a uniform scale, in order to make the figures more legible.

### DETAILLED DESCRIPTION OF PARTICULAR EMBODIMENTS

Figures 1a and 1b show a preferred embodiment of a pipe connection 100 between two pipes 10, 20 in a gas-insulated electric line of a GIS and a close up cross-sectional view at part of the connection 100, showing in further detail how the pipes 10, 20 are secured by the fasteners 40. Each of the pipes 10, 20 has a tubular section 11, 21 and a radial flange 12, 22 extending from an end thereof and provided with holes 13, 23 for fasteners, the pipes 10, 20 being spaced apart and arranged in opposing orientation, with the pipe flanges 12, 22 facing each other. The dimensions of both pipes 10, 20 are essentially the same, with both pipes 10, 20 in this embodiment being rotationally symmetrical, and in fact identical. Note that only a section of the first and second pipes 10, 20 are shown, and that they may be much longer and have a flange at the opposite end. The pipes 10, 20 are made of metal, and the holes 13, 23 provided on the flanges 12, 22 are threaded.

The sleeve 30 also comprises a tubular section 31 and a radial flange 32 extending from an end thereof and provided with holes 33 for fasteners. The external diameter of its flange 32 matches those of the first and second pipes 10, 20, however the tubular section 31 has a smaller diameter to that of the first pipe 10. The tubular section 31 of the sleeve 30 is located within the first pipe 10 while the flange 32 is placed in contact with the flange 22 of the second pipe 20. In particular, the tubular section 31 of the sleeve 30 is dimensioned such that it can fit sealingly within the tubular section 11 of the first pipe 10, as well as slidingly. The sleeve 30 is also made of metal, and the holes 33 in the flange 32 of the sleeve 30 correspond and align with those on the flange 12 of the first pipe 10.

An O-ring seal 37 is furnished in each of the two grooves 36 extending the circumference of the exterior wall of the tubular section 31 of the sleeve 30. When the sleeve 30 is inserted into the first pipe 10, the seals 37 engages the interior wall of tubular section 11 of the first pipe. 10, allowing the sleeve 30 to slide relative to the first pipe 10 while maintaining a sealing engagement between the two. Another groove 38 is provided as a circle on the front face 32F of the flange 32 of the sleeve 30, within which is furnished another O-ring seal 39. This front face 32F will be brought into contact with the front face 22F of the flange 22 of the second pipe 20, for the two to be engaged sealingly. These seals 37, 39 help to maintain the pressurised insulating gas within the pipes 10, 20 and not allow it to seep out through the pipe connection 100.

Note that the first pipe 10 and sleeve 30 within will be.generally coaxial, with the misalignment to be accommodated typically being between the first pipe 10 (or the sleeve 30 mounted therein) and the second pipe 20. Also, while the sleeve 30 is slidably mounted, it is primarily to link the two spaced apart pipes 10, 20 and not generally intended for further sliding movement once the connection is made. It will be understood that the sleeve 30 in this case can equally be provided in the second pipe 20, given that the first and second pipes 10, 20 are identical.

The pipe connection 100 further comprises a plurality of fasteners 40 extending through the holes 13, 23, 33 in the flanges of the pipes and sleeve. Each fastener 40 is made of metal and comprises an elongate member 41 (typically a bolt) and a securing member 46 (preferably a nut). The bolt 41 for connecting the two pipes 10, 20 comprises a larger diameter section 42, extending from one end to approximately the middle of the bolt 41, and a smaller diameter 44 extending from approximately the middle to the other end. An intermediate section 43, bearing a change in diameter is provided between the two. In this case, the intermediate section 43 is generally conical, tapering smoothly from the larger diameter section 42 to the smaller diameter section 44.

The larger and smaller diameter sections 42, 44 are both provided with threads at the parts near the ends of the bolt 41 while the remainder is left smooth. The axial end of the bolt 41 with the larger diameter section 42 comprises a tool-engagement formation 45, such as a hex-head. The opposite end comprises a securing member 46, a hexagonal nut in this case, although other securing members may be suitable. The fastener 40 may also comprise a washer 47, as appropriate, so that the nut 46 doesn't score or damage the adjacent flange 22 upon tightening to clamp the pipe connection together.

The larger diameter section 42 is fixedly secured to the flange 12 of the first pipe 10, its threaded part engaging the threaded hole 13 in the flange 12 of the first pipe 10 such that the bolt 41 does not move relative to the flange 12.

The conical intermediate section 43 of the bolt 41 engages the flange 32 of the sleeve 30 at a corresponding conical seat 34 located around the hole 33 of the sleeve 30. This allows centring of the bolt 41 on the conical seat 34 (just ahead of where the smaller diameter section 44 of the bolt 41 passes through the hole 33 of the sleeve 30), helps to align the first pipe 10 and the sleeve 30, and also improves the transfer of electricity (which will be discussed later on). This conical intermediate section 43 is smooth, comprises no threading to allow it to turn in the smooth conical seat 34 when the bolt 41 is rotated. In one variant, the intermediate section 43 of the bolt 41 may be stepped, and arranged to directly abut the flat back face 32B of the sleeve 30 without a conical seat being provided.

The smaller diameter section 44 of the bolt 41 also passes through the hole 23 of the flange 22 of the second pipe 20, and has a diameter smaller than it. This difference in diameter permits an offset (radial and/or angular) between the first and second pipes 10, 20 to be accommodated and the pipe connection 100 still to be made.

Assuming that the smaller diameter section 44 is 8mm in diameter, and the diameter of the hole 23 in the flange 22 of the second pipes 20 is 16mm, and given that the pipes 10, 20 are identical and the central axes of the holes 13, 23 in their flanges 12, 22 will otherwise normally align, the fastener 40 will be able to connect the first and second pipes 10, 20 in this case even if the central axes of the holes 13, 23 in the first and the second pipes were: offset in any direction by 4mm. If the smaller diameter section 44 is 4mm, and the hole in the flange of the second pipe is 10mm, the first and second pipes 10, 20 can be connected even if the central axes of the holes 13, 23 were offset by 3mm. Of course, if the offset between the holes 13, 23 was less than what could be accommodated, there would still be no problem making the connection.

It will be appreciated that the diameters of the smaller diameter section 44 of the bolt 41 and the hole 23 in the flange 22 of the second pipe 20 may be chosen to accommodate an offset of between 1 and 8mm, such as 2mm, 3mm, 4mm, 5mm 6mm or 8mm, or more, as appropriate. The choice of diameters to accommodate a particular (maximum) offset will be obvious to the skilled person and so will not be discussed in further detail. It will be understood that in order to accommodate the misalignment between first and second pipes 10, 20, there should be some sort of difference in diameter between the smaller diameter section 44 of all, or practically all, the fasteners 40 used to secure the connection 100 and the corresponding holes 23 in the flange 22 of the second pipe 20 so that collectively they will be able to accommodate the misalignment between the two pipes 10, 20. Of course, where the misalignment is greater that what can be accommodated (without resorting to repositioning the pipes), the pipes 10, 20 may still be able to be repositioned so that their holes 13, 23 align sufficiently to allow the fasteners 40 to pass through.

So as to provide a better understanding of the invention, the general steps of one way of connecting and to disconnecting the pipe connection 100 in the gas-insulated electric line of the GIS will be discussed, starting with the two pipes 10, 20 in spaced apart and in opposing orientation and with the sleeve 30 provided fully slid back within the first pipe 10.

Firstly, the sleeve 30 is slid forward so that its flange 32 engages the flange 22 of the second pipe 20. The bolt 41 is then inserted through the threaded hole 13 of the flange 12 of the first pipe 10, with the smaller diameter section 44 being introduced first from behind the back face 12B of the flange 12 of the first pipe 10, until it the smaller diameter section 44 end enters the hole 33 in the flange 32 of the sleeve 30, possibly guided by the conical seat 34. The bolt 41 is then pushed until the smaller diameter section 44 projects into the hole 23 in flange 22 of the second pipe 20. As explained earlier, as the smaller diameter section 44 is smaller in diameter than the hole 23 in the flange 22 of the second pipe 20, it will be able to pass through it even if the pipes 10, 20 are not completely aligned and there is an offset (to within what can be accommodated) between the central axes of the holes 13, 33, 23 in the flanges 12, 22, 32 of the first pipe 10 (and sleeve 30) and the second pipe 20.

Further pushing will cause the threaded part on the larger diameter section 42 to meet the threaded hole 13 in the flange 12 of the first pipe 10. The bolt 41 is then rotated from the back face 12B of the flange 12 of the first pipe 10 with the aid of a tool, e.g. a torque wrench, attached to the bolt hex head 45. As the bolt 41 is rotated, it moves forward due to the threaded engagement with the first pipe 10 until the conical intermediate section 43 abuts the flange of the sleeve 32. The conical intermediate section 43 engages the conical seat 34 provided in the back face of the sleeve 32B. The smaller diameter section 44 of the bolt 41 extends further through the hole 23 in the flange 22 of the second pipe 20. Further rotation of the bolt 41 will cause the conical intermediate section 43 to rotate on the conical seat 34 while forcing the sleeve 30 away from the first pipe 10 and into further engagement with the second pipe 20.

Finally, a washer 47 is mounted onto the smaller diameter section 44 of the bolt 41 protruding from behind the back face 22B of the flange 22 of the second.pipe 20, and a nut 46 screwed on from behind the back face 22B of the second flange 22 to abut it. The nut 46 is then tightened with the aid of a tool, e.g. a torque wrench, to be fixedly attached to the bolt 41 and to clamp the flange 22 of the second pipe 20 against the flange 32 of the sleeve 30. Other such fasteners 40 will be inserted into their respective holes 13, 23, 33 distributed along the flanges 12, 22, 32 of the pipes 10, 20 and sleeve 30 and secured in place so as to complete the connection 100. Unlike in the prior art, pipes 10, 20 which are misaligned can still be easily connected together. Also, with the pipes 10, 20 and sleeve 30 being secured with a fastener 40 of low part-count (fewer movable parts), the pipe connection 100 better withstands the base effect.

In order to disconnect the GIS pipe connection 100 to access the interior, e.g. for maintenance, testing, the above operation merely has to be done in the reverse order. It will be noted that the fastener 40 can be attached and detached by accessing the region behind the back faces 12B, 22B of the flanges 12, 22 of the first and second pipes 10, 20, with no access manipulation of the fastener 40 required in the region between these back faces 12B, 22B of the flanges 12, 22.

Furthermore, the bolt 41 serves as part of the primary path for electricity between the two pipes 10, 20, in particular between the first pipe 10 and sleeve 30. Accidental and permanent electricity will be able to flow across the pipes 10, 20, flowing along the tubular section 11 and flange 12 of the first pipe 10, then to the bolt 41 at the threaded part of the larger diameter section 42 until the conical intermediate section 43, where it will pass via the engagement with the conical seat 34 of the sleeve 30 to the flange of the sleeve 30, then transfer via the face to face connection to the flange 22 and then to the tubular section 21 of the second pipe 20. The large area of contact at the threaded engagement between the bolt 41 and the first pipe 10 as well as the increased area of contact between the conical intermediate section 43 of the bolt 41 and the conical seat 34 (as opposed to a flat contact surfaces for a given diameter) provides a reliable path for the transfer of electricity between the first pipe 10 and sleeve 30. As such, dedicated shunts are no longer need for this GIS pipe connection.

The pipe connection 100 of the invention neatly overcomes the problems associated with the GIS pipe connection of the prior art. Firstly, attachment and removal of the fastener 40 can entirely be conducted from behind the back faces 12B, 22B of the flanges 12, 22 of the first 10 and second pipes 20, and there is no need for any intervention in the region between these back faces 12B, 22B. Secondly, the fasteners 40 have a lower part-count compared to that of the prior art, meaning less movement between fastener parts, and allowing operation with just one hand. Thirdly, there is no longer a need for shunts, which can also restrict access to the fasteners, as the fasteners 40 themselves are able to reliably conduct electricity between the first pipe 10 and the sleeve 30. Fourthly, misalignments between two pipes 10, 20 can be accommodated for, and precise alignment is not necessary in order for the pipe connection 100 to be made. This implies that the pipe connection 100 can be easily and quickly made, and has a better ability to withstand the 'base effect'.

It will be appreciated that existing pipe connections, can readily be retrofitted, so as to provide a pipe connection according to the present invention. It will also be appreciated that the invention will be applicable to gas-insulated electric lines in general, and not necessarily those associated with a GIS.

## Claims

1. A pipe connection (100) in a gas-insulated electric line comprising a first pipe (10), a second pipe (20), a sleeve (30), and a plurality of fasteners (40), the first pipe (10), second pipe (20) and the sleeve (30) each comprising a tubular section (11, 21, 31) extending axially and a flange (12, 22, 32) extending radially therefrom with holes (13, 23, 33) for fasteners, the first pipe (10) and second pipe (20) provided in a spaced apart and opposing orientation, and the tubular section (31) of the sleeve (30) provided within the tubular section (11) of the first pipe (10) and with the flange (32) of the sleeve (30) in contact with the flange (22) of the second pipe (20), at least one of the fasteners (40) comprising a bolt (41) and a securing member (46), the bolt (41) extending through a respective hole (13, 23, 33) in the flanges (12, 22, 32) of the first pipe (10), the sleeve (30) and the second pipe (20),
**characterised in that**
the bolt (41) has a larger diameter section (42), a smaller diameter section (44), and an intermediate section (43) with a change of diameter, the larger diameter section (42) engaging the flange (12) of the first pipe (10), the intermediate section (43) engaging the flange (32) of the sleeve (30), and the smaller diameter section (44) being of smaller diameter than the hole (23) in the flange (22) of the second pipe (20) and extending through it, and that the securing member (46) is attached to the bolt (41) at the smaller diameter section (44) and engages the flange (22) of the second pipe.

2. A pipe connection according to claim 1, **characterised in that** the larger diameter section (42) is threadedly engaged and fixedly secured to the hole (13) of the flange (12) of the first pipe (10), and the bolt (41) further comprises a tool-engagement formation (45) at an axial end.

3. A pipe connection according to claim 1 or 2, **characterised in that** the intermediate section (43) abuts the back face (32B) of the flange (32) of the sleeve (30).

4. A pipe connection according to claim 1, 2 or 3, **characterised in that** the securing member (46) abuts the back face (22B) of the flange (22) of the second pipe (20).

5. A pipe connection according to any preceding claim, **characterised in that** there is an offset between the central axes of the holes (13, 23) in the flanges (12, 22) of the first and second pipes (10, 20) through which the bolt (41) extends.

6. A pipe connection according to claim 5, **characterised in that** the offset is between 2mm and 8mm.

7. A pipe connection according to any preceding claim, **characterised in that** the fastener (40) can be completely removed or attached without accessing the region between the back faces (12B, 22B) of the flanges (12, 22) of the first and second pipes (10, 20).

8. A pipe connection according to any preceding claim, **characterised in that** the pipe connection (100) is gas-tight.

9. A pipe connection according to claim 8, **characterised in that** a circumferential groove (36) is provided on the exterior of the tubular section (31) of the sleeve, and an O-ring seal (37) provided therein for sealingly engaging the interior of the tubular section (11) of the first pipe (10), and a circular groove (38) is provided on the front face (32F) of the flange (32) of the sleeve (30), and a ring-seal (39) provided therein for sealingly engaging the front face (22F) of the flange (22) of the second pipe (20).

10. A pipe connection according to any preceding claim, **characterised in that** the pipe connection can conduct electricity via the flange (12) of the first pipe (10) to the fastener (40) to the flange (32) of the sleeve (30) and to the flange (22) of the second pipe (20).

11. A gas-insulated switchgear comprising a pipe connection (100) according to any preceding claim.
